# EUROPEAN PATENT APPLICATION

(11) **EP 2 993 445 A1**
(43) Date of publication of application: **09.03.2016**
(21) Application number: 14200489.4
(22) Date of filing: 29.12.2014
(51) Int. Cl.: G01C 21/36

(54) **Loading method and apparatus for map label**

(30) Priority: 04.09.2014 CN 201410450238
(71) Applicant: Baidu Online Network Technology (Beijing) Co., Ltd, Beijing 100085 (CN)
(72) Inventor: Liu, Zhengui, Haidian District (CN); Chen, Xue, Haidian District (CN); Yang, Huirong, Haidian District (CN); Peng, Haibo, Haidian District (CN)
(74) Representative: Potter Clarkson LLP

(57) **Abstract**

The present invention provides a loading method and apparatus for a map label. The loading method comprises: in response to an instruction to scale up a map, searching for a newly added point of interest in a current visible area of the map after it has been scaled up with respect to the map before it has been scaled up; inheriting a label of an original point of interest of the map before it has been scaled up in the current visible area; and performing collision detection and loading on a label of the newly added point of interest. Compared to the prior art, the present invention can significantly improve the visual experience of a user when loading a map.

## Description

### Technical field

The present invention relates to the field of electronic maps, and in particular to a loading method and apparatus for a map label.

### Background art

At present, in the field of electronic maps, when responding to an instruction to scale up, labels of all points of interest, including original points of interest and newly added points of interest, in a map will be subjected to collision detection and re-loading, wherein said collision detection mainly refers to, by means of calculation, detecting whether the positions of labels of various points of interest and labels of other points of interest possibly coincide or intersect in the map after it has been scaled up. If coincidence or intersection exists, then labels of some points of interest therein are lost by accidental collision (that is, the labels lost by accidental collision are no longer loaded into the map after it has been scaled up, such that same cannot be displayed in the map after it has been scaled up) or great changes occur to the label positions thereof, such that a flashing picture occurs where the labels disappear then reappear.

Since the labels of some points of interest are lost by accidental collision, the experience of a user when querying a map becomes poorer, for example, after a user queries a certain point of interest "XX hotel" in a map, they want to see some points of interest near the hotel in the map after it has been scaled up, but if a label of the point of interest "XX hotel" in the map after it has been scaled up is lost by collision and cannot be displayed, then the user cannot learn which points of interest are located near the point of interest "XX hotel" from the map after it has been scaled up.

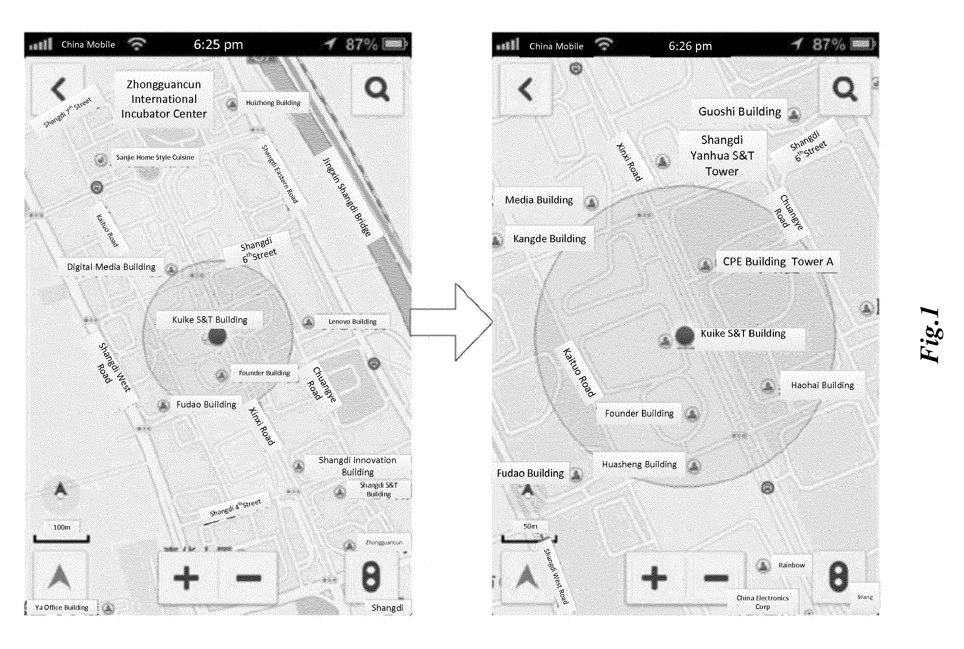

In some cases, although the labels of some points of interest are not lost by accidental collision, the change of the label positions thereof and picture flashing caused thereby also give the user a poor visual experience. Fig. 1 may be referred to. The left side of Fig. 1 shows a schematic diagram of a displayed interface before responding to an instruction to scale up a map in the prior art, and the right side of Fig. 1 shows a schematic diagram of a displayed interface after responding to the instruction to scale up a map in the prior art. According to Fig. 1, it can be seen that a text label of an original point of interest "Fudaodasha" is located at the right side of an icon thereof, and after the map is scaled up, the text label is moved to the left side of the icon thereof; since the relative positions of the text label and the icon have suddenly changed, the text label of the point of interest "Fudaodasha" is caused to flash during scaling up of the map, which gives a user a very poor visual experience; likewise, it can also be seen that the position of a text label of an original point of interest "Chuangyelu" has moved from the lower right of a point of interest "Fangzhengdasha" to the upper right of the point of interest "Fangzhengdasha", which likewise gives the user a poor visual experience.

### Contents of the invention

One of the objectives of the present invention is to provide a loading method and apparatus for a map label, which can effectively improve the visual experience of a user when loading a map.

According to one embodiment of one aspect of the present invention, a loading method for a map label is provided, comprising:
in response to an instruction to scale up a map, searching for a newly added point of interest in a current visible area of the map after it has been scaled up with respect to the map before it has been scaled up;
inheriting a label of an original point of interest of the map before it has been scaled up in the current visible area; and
performing collision detection and loading on a label of the newly added point of interest.

According to one embodiment of another aspect of the present invention, a loading apparatus for a map label is further provided, comprising:
a unit for, in response to an instruction to scale up a map, searching for a newly added point of interest in a current visible area of the map after it has been scaled up with respect to the map before it has been scaled up;
a unit for inheriting a label of an original point of interest of the map before it has been scaled up in the current visible area; and
a unit for performing collision detection and loading on a label of the newly added point of interest.

Compared to the prior art, the embodiments of the present invention have the advantages as follows:
1) since in this embodiment, after responding to an instruction to scale up a map, a label of an original point of interest of the map before it has been scaled up is inherited in a current visible area, a relative position and direction of the label of the original point of interest can remain unchanged on the map after it has been scaled up, which avoids the defect of giving a user a very poor retrieval experience due to losing the original point of interest by collision on the map after it has been scaled up, and also avoids the defect of flashing caused by a sudden change in the position of the label of the original point of interest;
2) by preferentially displaying the inherited label of the original point of interest of the map before it has been scaled up in the current visible area, this embodiment further eliminates the defects that the label of the point of interest suddenly disappears before displaying the map after it has been scaled up and that a bottom map of the point of interest suddenly changes after displaying same due to the fact that reloading all the points of interest causes a relatively time-consuming calculation;
3) when this embodiment is used for navigation, this embodiment inherits an icon and a text label of an original road (one of the points of interest) and preferentially displays the label of the original road, thereby greatly reducing the time consumed in road label collision detection, and significantly improving the speed of displaying the map during navigation; and
4) in addition, on the basis of inheriting the label of the original point of interest, by fading in the loaded label of a newly added point of interest into the current visible area for displaying, this embodiment further eliminates the poor visual effect of picture flashing.

### Description of the accompanying drawings

By means of reading the detailed description hereinafter on the non-limiting embodiments made with reference to the accompanying drawings, the other features, objectives, and advantages of the present invention will become more apparent:
Fig. 1 shows schematic diagrams of interfaces displayed before and after responding to an instruction to scale up a map in the prior art;
Fig. 2 is a flowchart of a loading method for a map label according to a preferred embodiment of the present invention;
Fig. 3 shows schematic diagrams of interfaces displayed before and after responding to an instruction to scale up a map according to a preferred embodiment of the present invention; and
Fig. 4 is a schematic block diagram of a loading apparatus for a map label according to a preferred embodiment of the present invention.

The same or similar reference numerals in the accompanying drawings represent the same or similar components.

### Detailed description of the embodiments

The present invention will be further described in detail in conjunction with the accompanying drawings below.

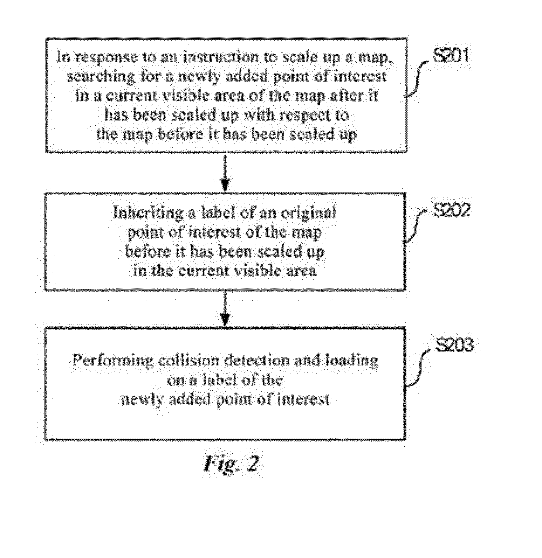

Please refer to Fig. 2. Fig. 2 is a flowchart of a loading method for a map label according to a preferred embodiment of the present invention. According to Fig. 2, the loading method comprises:
step S201, in response to an instruction to scale up a map, a newly added point of interest in a current visible area of the map after it has been scaled up with respect to the map before it has been scaled up is searched for.

The map in this embodiment may be used in applications such as map querying and navigation.

The point of interest in this embodiment has a broad meaning, comprising a point which is labeled on the map to represent a certain geographical position, such as a building, a bus stop, a street or a park, etc; in addition, each point of interest comprises information such as a name (usually labeled in text form), an icon (such as an icon label representing different geographical types of an office building, a supermarket, a residential area, a road, etc.), the longitude and the latitude, etc.

Optionally, the instruction to scale up a map may originate from a click of a user on a scaling up button, i.e. a "+" button provided in an electronic map, and may also originate from a rolling operation on the electronic map based on two fingers or operations such as clicking or scrolling on the electronic map by means of an input-assistant tool of the user, such as a mouse, and may also originate from an alteration to an input search term of a point of interest based on a search bar by the user (for example, changing a point of interest of a large search range to be a point of interest of a smaller search range, typically as if changing the point of interest of "Beijing" to be "Zhongguancun"), and the origination of the instruction to scale up the map is not limited here.

Optionally, when the operation instruction to click the scaling up button provided in the electronic map is responded to by the user, the electronic map is scaled up with the central point of the current visible area being the central point of scaling up; and when the rolling operation on the electronic map based on two fingers or operations such as clicking and scrolling on the electronic map by means of an input-assistant tool of the user, such as a mouse, is responded to, the electronic map is scaled up with the central point of the operation position as a central scaling up point. Certainly, the response means for scaling up the map is not limited here.

The current visible area refers to an interface of a certain size of the electronic map which can be displayed on a current terminal of the user, and with regard to the same electronic map being used on the same terminal, no matter scaling down or scaling up is performed thereon, the current visible area thereof is fixed, that is, the current visible area here is usually related to the screen attribute of the current terminal of the user and/or the version of the electronic map installed on the terminal.

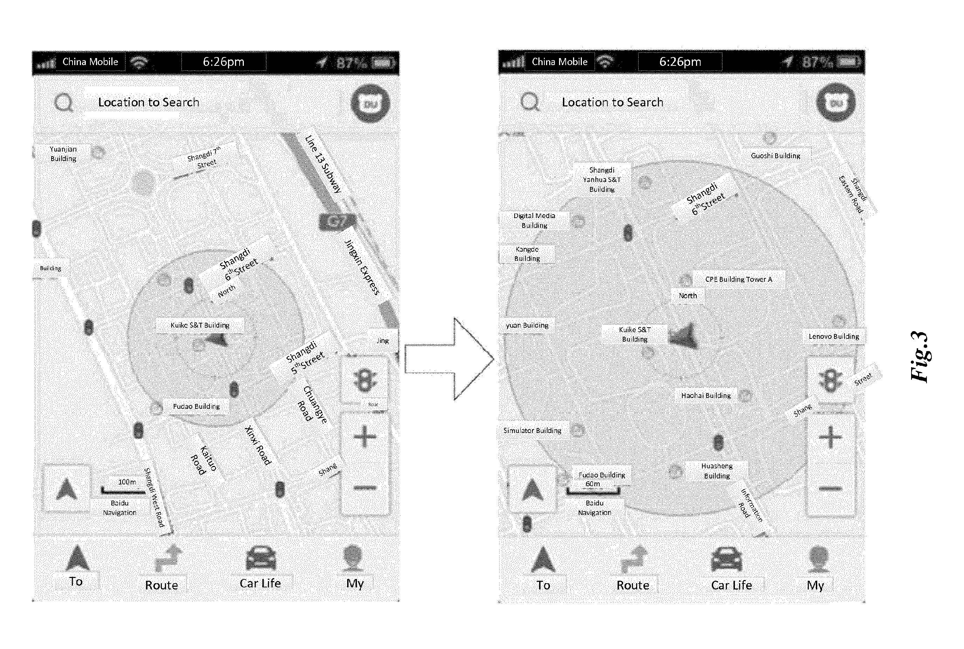

Usually, the map after it has been scaled up comprises more points of interest with respect to the map before it has been scaled up, and the points of interest are more concentrated. Please refer to Fig. 3. Fig. 3 shows schematic diagrams of interfaces displayed before and after responding to an instruction to scale up a map according to a preferred embodiment of the present invention. The left side of Fig. 3 shows the map of the current visible area (here a rectangular visible area is taken as an example, but the shape of the visible area is not limited here) before it has been scaled up, and the right side of Fig. 3 shows the map of the current visible area after it has been scaled up, and after it has been scaled up, points of interest "CPE dasha block A", "Haohaidasha", etc. are newly added to the surrounding of the point of interest "Kuikekejidasha".

Usually, with regard to different proportional scales, map data acquired from a map database corresponds to different layers and levels, and sub-map databases corresponding to different layers are also different. However, sub-map data maps corresponding to different levels in the same layer are usually the same. With regard to map data of different layers, for example, when the proportional scale is 1000 (kilometers) : 1, data of a world map is acquired from a sub-map database of a third layer, such that big points of interest, such as the Pacific Ocean, China, Africa, Europe and Asia are displayed on the map; and when the proportional scale is changed to be 500 (kilometers) : 1, data comprising a map of China is acquired from a sub-map database of a fourth layer, such that points of interest which are relatively small, such as various capitals of provinces, are displayed on the map. With regard to map data of different levels in the same layer, the map data usually originates from the same sub-database, and in the same sub-database, the map data of different levels has the relationship of containing and being contained. For example, in the case where map proportional scales are respectively 50 (meters) : 1, 100 (meters) : 1 and 200 (meters) : 1, the map data of which the level corresponds to the map proportional scale of 50 (meters) : 1 not only contains the map data of which the level corresponds to the map proportional scale of 100 (meters) : 1, but also contains the map data of which the level corresponds to the map proportional scale of 200 (meters) : 1. During scaling up of the map, if geographical data of different layers is involved, usually the problem of some points of interest being lost by collision is not involved, and therefore, this embodiment mainly unfolds a technical solution regarding geographical data of different levels involved during scaling up the map.

Optionally, the step of, in response to an instruction to scale up a map, searching for a plurality of newly added points of interest in a current visible area of the map after it has been scaled up with respect to the map before it has been scaled up comprises:
- in response to the instruction to scale up a map, a level of the map after it has been scaled up is determined. That is, the level of the map is determined according to a corresponding proportional scale after the map is scaled up, for example, according to a corresponding rule, the level of the map corresponding to the proportional scale of 100 (meters) : 1 is the third level, and the level of the map corresponding to the proportional scale of 50 (meters) : 1 is the fourth level. Here, the rules corresponding to different levels and stipulated by different proportional scales are not limited.
- Based on the determined level of the map after it has been scaled up, a plurality of newly added points of interest in the current visible area corresponding to the level of the map and with respect to the map before it has been scaled up are searched for. As previously described, the map data of different levels in the same layer has a relationship of containing and being contained, and the map data of the level corresponding to the map after it has been scaled up usually contains the data of the level corresponding to the map before it has been scaled up.

Step S202, a label of an original point of interest of the map before it has been scaled up in the current visible area is inherited.

In order to improve the speed of loading a map and avoid a label of an original point of interest being lost by collision in the map after it has been scaled up, in this embodiment, in response to an instruction to scale up the map, the original point of interest of the map before it has been scaled up in a current visible area is inherited.

Optionally, inheriting the original point of interest of the map before it has been scaled up in the current visible area comprises:
inheriting a relative position and direction of the label of the original point of interest of the map before it has been scaled up in the current visible area. The label comprises, but is not limited to, a label of a text type and a label of an icon type.

Specifically, please refer to Fig. 3. Before the map is scaled up, original points of interest displayed in the current visible area comprise Kuikekejidasha, Fudaodasha, Shangdiliujie, etc., then in response to an instruction to scale up the map, relative positions of icons and relative positions and directions of text labels of the original points of interest which comprise Kuikekejidasha, Fudaodasha, Shangdiliujie, etc. are inherited, for example, the position of a text label of the point of interest "Fudaodasha" being located at the right side of the icon is inherited, and the relative position and direction of a text label of the point of interest "Shangdiliujie" being located between the current visible area and a corresponding icon are inherited. Therefore, the inherited label can effectively avoid the problems of not being displayed due to being lost by collision during scaling up the map or flashing caused by the change of the position and/or direction thereof, so that a user can be made to feel that the label of each inherited point of interest after the map is scaled up translates radially in a direction away from the position of the central point of scaling up, while the relative position thereof is not changed. According to different scaling up operation methods, the positions of the central points of scaling up are different. For example, when a "+" icon is clicked so as to scale up, the position of the central point of scaling up is, by default, the central point position of a visible map or a position of a user equipment currently positioned on the map. If a scaling up operation is performed by means of two fingers contacting a screen, the central point position of scaling up is, by default, the central point position of a connecting line between two contact points of the fingers and the screen.

Step S203, collision detection and loading are performed on a label of the newly added point of interest.

On the basis of inheriting an original point of interest of the map before it has been scaled up in a current visible area, the collision detection performed on the newly added point of interest comprises carrying out collision detection on the position and direction of a text label and an icon thereof. Optionally, during the collision detection, the positions or/and directions of labels of some newly added points of interest are adjusted according to the shape of the current visible area; optionally, during the collision detection, some newly added points of interests are preferentially loaded according to a certain rule, and here, the method of formulating the rule is not limited. Through collision detection, points of interest which exist in the current visible area and are not lost by collision are loaded into the map after it has been scaled up, wherein the loaded newly added points of interest comprise points of interest of which the positions or/and directions of the labels thereof are changed.

Please still refer to Fig. 3. Before the map is scaled up, the original points of interest displayed in the current visible area comprise Kuikekejidasha, Fudaodasha, Shangdiliujie, etc., and after the instruction to scale up the map is responded to, and a plurality of newly added points of interest in the current visible area comprising Huashengdasha, Haohaidasha, CPE dasha block A, etc. have been searched for, collision detection is performed on these newly added points of interest which have been searched for, thereby avoiding losing the original points of interest by collision.

Optionally, in order to entirely eliminate the defect that a blank picture (i.e. icons and text on the map all disappear suddenly and then reappear) occurs before the map is normally displayed after it has been scaled up due to the fact that reloading all the points of interest causes a relatively time-consuming calculation in the prior art, when the map after it has been scaled up is displayed, with respect to the displaying of the label of the newly added point of interest, the label of the inherited original point of interest of the map before it has been scaled up in the current visible area is preferentially displayed, and therefore, with respect to the map before it has been scaled up, the relative position and direction between the text label of the original point of interest and the labeled icon thereof still remain unchanged; and with respect to a navigation application, the text label of a road of the original point of interest is still displayed at the original relative position.

Optionally, with regard to different applications such as single map retrieval and navigation, there is a difference in inheriting a label for the original point of interest. With regard to an application of single map retrieval, that is, when operations such as scaling up and rotating are performed on the map, labeled points of interest, comprising for example a building, a bus stop, a street and a road, are inherited, and the various inherited original points of interest may have a sequential order in display, and may also not have a sequential order; however, with regard to navigation, since the importance of road display is usually higher than points of interest of other types, labels of inherited road points of interest are preferentially displayed. With regard to an icon near the edge of a visible screen, for example, a road name, if a relative position of a label is maintained according to the method of the present invention, the label will be caused to disappear from the visible screen after it has been scaled up, then the positions of these labels (especially a road name) with respect to the labeled objects thereof may be changed adaptively, for example, the icon of the road name moves along the road so it still appears in a visible range of the map after it has been scaled up.

Optionally, with regard to a navigation application, in performing collision detection on the label of a newly added point of interest, when a point of interest of a road type collides with points of interest of other types, the label of the point of interest of a road type is preferentially retained, for example, the label of the point of interest of a road type is preferentially retained by losing points of interest of other types by collision or adjusting the positions or/and directions of the labels of points of interest of other types.

Optionally, in order to further reduce the flashing brought about by performing collision detection on the newly added point of interest, the method further comprises:
fading in the label of the newly added point of interest after being loaded into the current visible area for displaying.

Certainly, the fading-in display method is merely an example, and other display method which can slow down the flashing effect of a page should also be contained herein.

The above merely describes the step of how to process labels of the original point of interest and the newly added point of interest after it has been scaled up; certainly, the process of processing the labels of various points of interest when scaling down the map may likewise refer to the above-mentioned method for performing reverse processing, for example, in response to an instruction to scale down the map, and with regard to the original point of interest which can still be displayed after scaling down the map, the original position, the position and direction of the text label, etc. thereof are inherited.

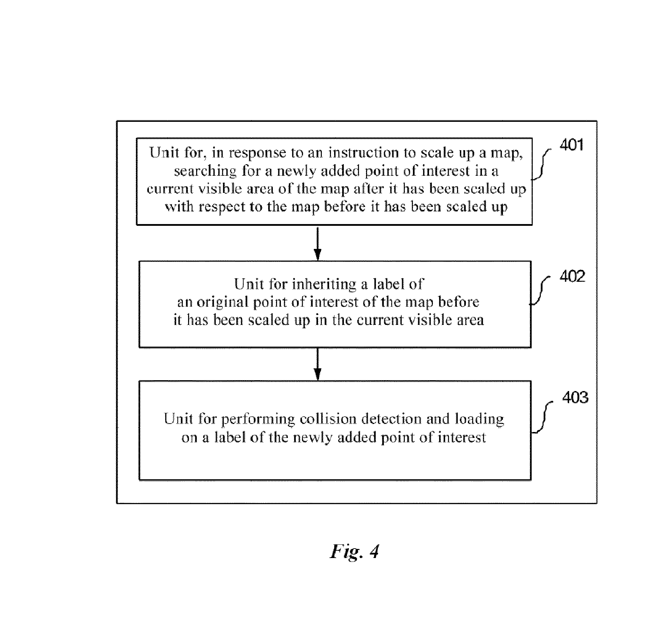

Please refer to Fig. 4. Fig. 4 is a schematic block diagram of a loading apparatus for a map label according to another preferred embodiment of the present invention. According to Fig. 4, the loading apparatus comprises:
a unit 401 for, in response to an instruction to scale up a map, searching for a newly added point of interest in a current visible area of the map after it has been scaled up with respect to the map before it has been scaled up;
a unit 402 for inheriting a label of an original point of interest of the map before it has been scaled up in the current visible area; and
a unit 403 for performing collision detection and loading on a label of the newly added point of interest.

The map in this embodiment may be used in applications such as map retrieval and navigation.

The point of interest in this embodiment has a broad meaning, comprising a point which is labeled on the map to represent a certain geographical position, such as a building, a bus stop, a street or a park; in addition, each point of interest comprises information such as a name (usually labeled in text form), an icon (such as an icon label representing different geographical types of an office building, a supermarket, a residential area, a road, etc.), the longitude and the latitude.

Optionally, the instruction to scale up a map may originate from a click of a user on a scaling up button, i.e. a "+" button provided in an electronic map, and may also originate from a rolling operation on the electronic map based on two fingers or operations such as clicking and scrolling on the electronic map by means of an input-assistant tool of the user, such as a mouse, and may also originate from an alteration to an input search term of a point of interest based on a search bar by the user (for example, changing a point of interest of a large search range to be a point of interest of a smaller search range, typically if as changing the point of interest of "Beijing" to be "Zhongguancun"), and the origination of the instruction to scale up the map is not limited here.

Optionally, when the operation instruction to click the scaling up button provided in the electronic map is responded to by the user, the unit 401 scales up the electronic map with the central point of the current visible area being the central point of scaling up; and when the rolling operation on the electronic map based on two fingers or operations such as clicking and scrolling on the electronic map by means of an input-assistant tool of the user, such as a mouse, is responded to, the unit 401 scales up the electronic map with the central scaling up point. Certainly, the response means for scaling up the map is not limited here.

The current visible area refers to an interface of a certain size of the electronic map which can be displayed on a current terminal of the user, and with regard to the same electronic map being used on the same terminal, no matter whether scaling down or scaling up is performed thereon, the current visible area thereof is fixed, that is, the current visible area here is usually related to the screen attribute of the current terminal of the user and the version of the electronic map installed on the terminal.

This embodiment mainly unfolds a technical solution regarding geographical data of different levels involved during scaling up of the map.

Optionally, the unit 401 for, in response to an instruction to scale up a map, searching for a newly added point of interest in a current visible area of the map after it has been scaled up with respect to the map before it has been scaled up comprises:
a module (not shown in the figure) for, in response to the instruction to scale up a map, determining a level of the map after it has been scaled up; and
a module (not shown in the figure) for, based on the determined level of the map after it has been scaled up, searching for a newly added point of interest in the current visible area corresponding to the level of the map and with respect to the map before it has been scaled up.

Optionally, the unit 402 for inheriting a label of an original point of interest of the map before it has been scaled up in the current visible area is used for:
inheriting a relative position and direction of the label of the original point of interest of the map before it has been scaled up in the current visible area. Therefore, the inherited label can effectively avoid the problems of not being displayed due to being lost by collision during scaling up the map or flashing caused by the change of the position and/or direction thereof, so that a user can be made to feel that the label of each inherited point of interest after the map is scaled up translates radially in a direction away from the position of the central point of scaling up, while the relative position thereof is not changed. According to different scaling up operation means, positions of central points of scaling up are different. For example, when a "+" icon is clicked so as to scale up, the position of the central point of scaling up is, by default, the central point position of a visible map or a position of a user equipment currently positioned on the map. If a scaling up operation is performed by means of two fingers contacting a screen, the central point position of scaling up is, by default, the central point position of a connecting line between two contact points of the fingers and the screen.

Optionally, with regard to different applications such as single map retrieval and navigation, there is a difference in inheriting a label for the original point of interest. With regard to an application of single map retrieval, that is, when operations such as scaling up and rotating are performed on the map, labeled points of interest, comprising for example a building, a bus stop, a street and a road, are inherited, and the various inherited original points of interest may have a sequential order in display, and may also not have a sequential order; however, with regard to navigation, since the importance of road display is usually higher than points of interest of other types, labels of inherited road points of interest are preferentially displayed. With regard to an icon near the edge of a visible screen, for example, a road name, if a relative position of a label is maintained according to the method of the present invention, the label will be caused to disappear from the visible screen after it has been scaled up, then the unit for inheriting a label of an original point of interest of the map before it has been scaled up in the current visible area may adaptively change the positions of these labels (especially a road name) with respect to the labeled objects thereof, for example, the icon of the road name moves along the road so it still appears in a visible range of the map after it has been scaled up. Optionally, the loading apparatus further comprises:
a unit (not shown in the figure) for prioritizing the display of the label of the original point of interest over the display of the label of the newly added point of interest.

Optionally, the loading apparatus further comprises:
a unit (not shown in the figure) for fading in the label of the newly added point of interest after being loaded to the current visible area for displaying.

Aspects of various embodiments are specified in the claims. Those and other aspects of various embodiments are specified in the following numbered clauses:
1. A loading method for a map label, comprising:
   in response to an instruction to scale up a map, searching for a newly added point of interest in a current visible area of the map after it has been scaled up with respect to the map before it has been scaled up;
   inheriting a label of an original point of interest of the map before it has been scaled up in the current visible area; and
   performing collision detection and loading on a label of the newly added point of interest.
2. The loading method according to clause 1, characterized in that the step of, in response to an instruction to scale up a map, searching for a newly added point of interest in a current visible area of the map after it has been scaled up with respect to the map before it has been scaled up comprises:
   in response to the instruction to scale up the map, determining a level of the map after it has been scaled up; and
   based on the determined level of the map after it has been scaled up, searching for a newly added point of interest in the current visible area corresponding to the level of the map and with respect to the map before it has been scaled up.
3. The loading method according to clause 1, characterized in that inheriting a label of an original point of interest of the map before it has been scaled up in the current visible area comprises:
   inheriting a relative position and direction of the label of the original point of interest of the map before it has been scaled up in the current visible area with respect to a labeled icon.
4. The loading method according to clause 1, further comprising:
   prioritizing the display of the label of the original point of interest over the display of the label of the newly added point of interest.
5. The loading method according to clause 1, further comprising:
   fading in the label of the newly added point of interest after being loaded into the current visible area for displaying.
6. The loading method according to any one of clauses 1-3, further comprising:
   if inheriting the relative position and direction of the label of the original point of interest of the map before it has been scaled up in the current visible area with respect to a labeled icon would cause the label to disappear from the visible area of the map after it has been scaled up, then adaptively changing the position of the label so as to make same appear in the visible area of the map after it has been scaled up.
7. The loading method according to clause 6, characterized in that when the label of which the position needs to be changed is a road name, the display position of the label is adjusted along the road to make same appear in the visible area of the map after it has been scaled up.
8. A loading apparatus for a map label, comprising:
   a unit for, in response to an instruction to scale up a map, searching for a newly added point of interest in a current visible area of the map after it has been scaled up with respect to the map before it has been scaled up;
   a unit for inheriting a label of an original point of interest of the map before it has been scaled up in the current visible area; and
   a unit for performing collision detection and loading on a label of the newly added point of interest.
9. The loading apparatus according to clause 8, characterized in that the unit for, in response to an instruction to scale up a map, searching for a newly added point of interest in a current visible area of the map after it has been scaled up with respect to the map before it has been scaled up comprises:
   a module for, in response to the instruction to scale up a map, determining a level of the map after it has been scaled up; and
   a module for, based on the determined level of the map after it has been scaled up, searching for a newly added point of interest in the current visible area corresponding to the level of the map and with respect to the map before it has been scaled up.
10. The loading apparatus according to clause 8, characterized in that the unit for inheriting a label of an original point of interest of the map before it has been scaled up in the current visible area is used for:
   inheriting a relative position and direction of the label of the original point of interest of the map before it has been scaled up in the current visible area.
11. The loading apparatus according to clause 8, further comprising:
   a unit for prioritizing the display of the label of the original point of interest over the display of the label of the newly added point of interest.
12. The loading apparatus according to clause 8, further comprising:
   a unit for fading in the label of the newly added point of interest after being loaded into the current visible area for displaying.
13. The loading apparatus according to any one of clauses 8-11, characterized in that the unit for inheriting a label of an original point of interest of the map before it has been scaled up in the current visible area determines that if inheriting the relative position and direction of the label of the original point of interest of the map before it has been scaled up in the current visible area with respect to a labeled icon would cause said label to disappear from the visible area of the map after it has been scaled up, then the position of the label is adaptively changed so as to make same appear in the visible area of the map after it has been scaled up.
14. The loading apparatus according to clause 8, characterized in that when the label of which the position needs to be changed is a road name, the display position of the label is adjusted along the road to make same appear in the visible area of the map after it has been scaled up.

Those skilled in the art should understand that the above-mentioned various units and various modules are merely examples, and in practice, they may be independent units or modules, or any two units or modules are integrated into a unit or module, and may also all be integrated into a unit or module.

Those skilled in the art should understand that the present invention may be implemented as a method, an apparatus or a computer program product. Therefore, the present disclosure may be specifically implemented in the forms as follows, that is: may be entirely hardware, and may also be entirely software, and may also be in the form of a combination of hardware and software.

The flowcharts and block diagrams in the accompanying drawings illustrate the system architecture, functions, and operations which may be implemented according to the system, method and computer program product in a plurality of embodiments of the present invention. In this regard, each box in the flowchart or block diagram may represent a module, a program segment or a part of a code, and the module, program segment or the part of a code contains one or more executable instructions for implementing a stipulated logical function. It should also be noted that in some implementations as replacements, the functions labeled in boxes may also occur in an order different from that as labeled in the accompanying drawings. For example, two continuous boxes may actually be carried out basically in parallel, and sometimes, they may also be carried out in reverse order, and this is determined according to the related functions. It should also be noted that each box in a block diagram and/or flowchart and a combination of boxes in a block diagram and/or flowchart may be implemented by means of a specific hardware-based system for executing a stipulated function or operation, or may be implemented by means of a combination of specific hardware and computer instructions.

For those skilled in the art, it is apparent that the present invention is not limited to the details of the above exemplary embodiments, and the present invention can be implemented by means of other particular forms without departing from the spirit or basic features of the present invention. Therefore, in any way, the embodiments should be regarded as being exemplary and not as being limitative. The scope of the present invention is limited by the appended claims, instead of the above description. Thus, all variations intended to fall into the meaning and scope of equivalent elements of the claims should be covered within the present invention. No reference numerals in the claims should be regarded as limiting the involved claims.

## Claims

1. A loading method for a map label, comprising:
in response to an instruction to scale up a map, searching for a newly added point of interest in a current visible area of the map after it has been scaled up with respect to the map before it has been scaled up;
inheriting a label of an original point of interest of the map before it has been scaled up in the current visible area; and
performing collision detection and loading on a label of the newly added point of interest.

2. The loading method according to claim 1, **characterized in that** the step of, in response to an instruction to scale up a map, searching for a newly added point of interest in a current visible area of the map after it has been scaled up with respect to the map before it has been scaled up comprises:
in response to the instruction to scale up the map, determining a level of the map after it has been scaled up; and
based on the determined level of the map after it has been scaled up, searching for a newly added point of interest in the current visible area corresponding to the level of the map and with respect to the map before it has been scaled up.

3. The loading method according to claim 1, **characterized in that** inheriting a label of an original point of interest of the map before it has been scaled up in the current visible area comprises:
inheriting a relative position and direction of the label of the original point of interest of the map before it has been scaled up in the current visible area with respect to a labeled icon.

4. The loading method according to claim 1, further comprising:
prioritizing the display of the label of the original point of interest over the display of the label of the newly added point of interest.

5. The loading method according to claim 1, further comprising:
fading in the label of the newly added point of interest after being loaded into the current visible area for displaying.

6. The loading method according to any one of claims 1-3, further comprising:
if inheriting the relative position and direction of the label of the original point of interest of the map before it has been scaled up in the current visible area with respect to a labeled icon would cause the label to disappear from the visible area of the map after it has been scaled up, then adaptively changing the position of the label so as to make same appear in the visible area of the map after it has been scaled up.

7. The loading method according to claim 6, **characterized in that** when the label of which the position needs to be changed is a road name, the display position of the label is adjusted along the road to make same appear in the visible area of the map after it has been scaled up.

8. A loading apparatus for a map label, comprising:
a unit for, in response to an instruction to scale up a map, searching for a newly added point of interest in a current visible area of the map after it has been scaled up with respect to the map before it has been scaled up;
a unit for inheriting a label of an original point of interest of the map before it has been scaled up in the current visible area; and
a unit for performing collision detection and loading on a label of the newly added point of interest.

9. The loading apparatus according to claim 8, **characterized in that** the unit for, in response to an instruction to scale up a map, searching for a newly added point of interest in a current visible area of the map after it has been scaled up with respect to the map before it has been scaled up comprises:
a module for, in response to the instruction to scale up a map, determining a level of the map after it has been scaled up; and
a module for, based on the determined level of the map after it has been scaled up, searching for a newly added point of interest in the current visible area corresponding to the level of the map and with respect to the map before it has been scaled up.

10. The loading apparatus according to claim 8, **characterized in that** the unit for inheriting a label of an original point of interest of the map before it has been scaled up in the current visible area is used for:
inheriting a relative position and direction of the label of the original point of interest of the map before it has been scaled up in the current visible area.

11. The loading apparatus according to claim 8, further comprising:
a unit for prioritizing the display of the label of the original point of interest over the display of the label of the newly added point of interest.

12. The loading apparatus according to claim 8, further comprising:
a unit for fading in the label of the newly added point of interest after being loaded into the current visible area for displaying.

13. The loading apparatus according to any one of claims 8-11, **characterized in that** the unit for inheriting a label of an original point of interest of the map before it has been scaled up in the current visible area determines that if inheriting the relative position and direction of the label of the original point of interest of the map before it has been scaled up in the current visible area with respect to a labeled icon would cause said label to disappear from the visible area of the map after it has been scaled up, then the position of the label is adaptively changed so as to make same appear in the visible area of the map after it has been scaled up.

14. The loading apparatus according to claim 8, **characterized in that** when the label of which the position needs to be changed is a road name, the display position of the label is adjusted along the road to make same appear in the visible area of the map after it has been scaled up.

15. A computer program configured to perform the method of any preceding method claim.
